# EUROPEAN PATENT APPLICATION

(11) **EP 2 251 922 A1**
(43) Date of publication of application: **17.11.2010**
(21) Application number: 09800233.0
(22) Date of filing: 24.07.2009
(51) Int. Cl.: H01M 2/30, H01M 2/08, H01M 2/20, H01M 6/02, H01M 10/04

(54) **BIPOLAR CELL**

(30) Priority: 25.07.2008 JP 2008191806
(71) Applicant: Panasonic Corporation, Kadoma-shi Osaka 571-8501 (JP)
(72) Inventor: UEDA, Tomohiro, 1-61 Shiromi 2-chome, Chuo-ku, Osaka-shi, Osaka 5406207 (JP)
(74) Representative: TBK-Patent
(86) International application number: PCT/JP2009/003502
(87) International publication number: WO 2010/010717

(57) **Abstract**

The present invention relates to a bipolar battery. It is an object of the present invention to provide a bipolar battery having a good productivity and a high reliability of the electrical connection with an apparatus when the battery is attached to various apparatuses. A bipolar battery 1 of the present invention includes a positive electrode 10, a negative electrode 11, a bipolar electrode 12, an electrolyte-containing separator 13, and a sealing member 14. Current collectors 20, 22, and 24 of the positive electrode 10, the negative electrode 11, and the bipolar electrode 12 are respectively provided with at least two projections 20a to 20d, 22a to 22d, and 24a to 24d, and these projections project from peripheral portions of the current collectors.

## Description

### Technical Field

The present invention relates to a bipolar battery. More specifically, the present invention mainly relates to the improvement of a current collector used in a bipolar battery.

### Background Art

A bipolar battery is a battery having a structure in which a bipolar electrode is laminated between a positive electrode and a negative electrode via an electrolyte-containing separator. A bipolar electrode is an electrode in which one surface of a current collector is provided with a positive electrode active material layer and the other surface thereof is provided with a negative electrode active material layer. Bipolar batteries have been attracting attention, for example, as a power source for the engine of electric vehicles and hybrid vehicles, because it can relatively easily increase voltage (increase power density), reduce the number of constituent components, reduce electrical resistance between unit cells, increase energy density by reducing unnecessary space, and the like. Furthermore, the thickness of a bipolar battery can be reduced by using a solid electrolyte such as a polymer electrolyte, and, thus, it has also raised expectations as a power source of various electronic apparatuses and the like.

Various proposals have been conventionally made regarding bipolar batteries. For example, a configuration has been proposed in which, in a cell stack configured from stacked unit cells including a bipolar electrode, a tab electrode for measuring the voltage of each unit cell projects outward from one side face of the battery (see Patent Document 1, for example).

Furthermore, a bipolar battery has been proposed in which a positive electrode, a plurality of bipolar electrodes, and a negative electrode are laminated with an electrolyte-containing separator interposed therebetween, and peripheral portions of the bipolar electrodes are provided with a sealing member (see Patent Document 2, for example). In this battery, a thin sealing member is provided at peripheral portions of a plurality of bipolar electrodes so as to block space between current collectors of the bipolar electrodes.

For example, when a portable electronic apparatus is dropped or collides with another object, a large stress is applied from the outside to the apparatus. If the battery of Patent Document 2 is attached to this sort of portable electronic apparatus, detachment of the battery from the electronic apparatus, an attachment failure or a connection failure of the battery to the electronic apparatus, damage of the battery, leakage of the electrolyte, and the like easily occur.

Furthermore, a configuration has been proposed in which, in a bipolar battery in which a positive electrode, a plurality of bipolar electrodes, and a negative electrode are laminated with an electrolyte-containing separator interposed therebetween, stainless steel containing 16 to 26 mass% of chromium and 0.5 to 7.0 mass% of molybdenum is used as a current collector material (see Patent Document 3, for example). Patent Document 3 states that the thickness of the current collector can be reduced because the above-described specific stainless steel has no risk of formation of pinholes, and occurrence of liquid junction associated therewith, and, when the thickness is reduced, the internal resistance of the current collector can be reduced, and the performance of the battery can be improved.

Patent Document 1: Japanese Laid-Open Patent Publication No. 2004-87238
Patent Document 2: Japanese Laid-Open Patent Publication No. 2007-122881
Patent Document 3: Japanese Laid-Open Patent Publication No. 2007-242424

### Disclosure of the Invention

### Problem to be Solved by the Invention

In a conventional bipolar battery, each of a positive and a negative electrode is provided with only one electrode terminal that is to be connected with an external apparatus. Ordinarily, the electrode terminals for electrical connection are formed typically as projections that extend outward from the battery at end portions of current collectors. In a state where these projections are simply brought into contact with a circuit of an external apparatus, an electrical contact failure may occur. Thus, methods for connecting the projections and the circuit of the external apparatus by soldering, welding, or the like are applied.

However, in the case where it is attempted to reduce the thickness of this bipolar battery, it is necessary to reduce the thickness of the current collectors. If the thickness of the current collectors is reduced, the thickness of the projections is inevitably reduced as well, and their strength is lowered. Accordingly, even in the case where the bipolar battery is connected with an external apparatus by welding, for example, when the apparatus is dropped or collides with another object, the connected portion may be deformed, bent, or broken, and the electrical connection may be easily broken. Thus, conventional bipolar batteries are problematic in that the reliability of the electrical connection with an apparatus is low.

Furthermore, in a step that produces thin bipolar batteries, current collectors (metal foil) are difficult to handle because the mechanical strength of the current collectors is low and the self-supporting properties are poor. Furthermore, since a relatively large number of constituent components including a positive electrode, a negative electrode, a bipolar electrode, and electrolytes are laminated, positioning in the lamination step is difficult, and a plurality of electrodes are easily displaced from each other. Furthermore, this sort of low productivity increases the cost of thin bipolar batteries.

It is an object of the present invention to provide a bipolar battery having a good productivity and a high reliability of the electrical connection with an apparatus when the battery is attached to various apparatuses.

### Means for Solving the Problem

The present invention is directed to a bipolar battery, including: a positive electrode; a negative electrode; a bipolar electrode disposed between the positive electrode and the negative electrode; and an electrolyte-containing separator;
wherein the positive electrode includes a positive electrode current collector and a positive electrode active material layer formed on one face of the positive electrode current collector,
the negative electrode includes a negative electrode current collector and a negative electrode active material layer formed on one face of the negative electrode current collector,
the bipolar electrode includes a bipolar electrode current collector, a positive electrode active material layer formed on one face of the bipolar electrode current collector, and a negative electrode active material layer formed on another face of the bipolar positive electrode current collector, the positive electrode active material layers and the negative electrode active material layers included in the positive electrode, the negative electrode, and the bipolar electrode have at least two cell elements formed by layering one positive electrode active material and one negative electrode active material so as to oppose each other via the electrolyte-containing separator,
the cell elements are sealed by a sealing member disposed at peripheral portions of the cell elements, and
each of the positive electrode current collector, the negative electrode current collector, and the bipolar electrode current collector is provided with at least two projections projecting from peripheral portions of the current collectors. The bipolar battery may be provided with at least two bipolar electrodes.

It is preferable that the projections projecting from the positive electrode current collector, the negative electrode current collector, and the bipolar electrode current collector are arranged so as not to overlap each other when viewed from above from a positive electrode side.

In a preferable embodiment of the present invention, it is preferable that the electrolyte-containing separator is a solid electrolyte.
In another preferable embodiment of the present invention, it is preferable that the electrolyte-containing separator is a porous base material impregnated with a liquid electrolyte.

It is preferable that at least one projection projects in each of four directions that are perpendicular to a direction in which the positive electrode, the negative electrode, and the bipolar electrode are laminated and that are different from each other, and that, among the four directions, two directions that are adjacent to each other in a clockwise direction cross each other at right angles.

It is preferable that at least part of the projections is sealed by a sealing member.
It is preferable that tip ends of the projections have at least one chamfered corner.

### Effect of the Invention

In the bipolar battery of the present invention, each of a positive electrode current collector, a negative electrode current collector, and a current collector of a bipolar electrode (a bipolar electrode current collector) is provided with at least two projections. Furthermore, the projections extend outward from different positions on side faces in the thickness direction of the battery. With this configuration, the possibility that an electrical connection failure occurs between the bipolar battery and an external apparatus can be significantly reduced, and the reliability of the electrical connection between the bipolar battery and the external apparatus can be improved. Furthermore, it is possible to obtain a bipolar battery that is thin and still has various advantages of the present invention, by using a solid electrolyte, in particular, a polymer electrolyte as the electrolyte.

Furthermore, with this configuration, a positive electrode sheet, a bipolar electrode sheet, and a negative electrode sheet in which a plurality of positive electrodes, a plurality of negative electrodes, and a plurality of bipolar electrodes are respectively formed without being cut apart can be laminated to form a plurality of bipolar electrodes, and then cut apart into respective bipolar electrodes. Accordingly, a plurality of bipolar batteries can be efficiently produced, and the productivity is significantly improved. Here, the above-described production method can be particularly preferably applied to production of thin bipolar batteries. Furthermore, even in the case where the thickness of the bipolar battery of the present invention is reduced, a decrease in the mechanical strength of the battery, an electrical connection failure between the battery and an external apparatus, and the like hardly occur due to the above-described structural characteristics, and, thus, the bipolar battery can be preferably used.

### Brief Description of the Drawings

FIG. 1 is a simplified plan view showing the configuration of a bipolar battery of an embodiment of the present invention.
FIG. 2A is a cross-sectional view of the bipolar battery shown in FIG. 1 taken along cutting line A-A.
FIG. 2B is a cross-sectional view of the bipolar battery shown in FIG. 1 taken along cutting line B-B.
FIG. 2C is a cross-sectional view of the bipolar battery shown in FIG. 1 taken along cutting line C-C.
FIG. 3 is a side view of the bipolar battery shown in FIG. 1 viewed in the direction of arrow X.
FIG. 4A is a plan view showing the configuration of a positive electrode current collector used in the bipolar battery shown in FIG. 1.
FIG. 4B is a plan view showing the configuration of a negative electrode current collector used in the bipolar battery shown in FIG. 1.
FIG. 4C is a plan view showing the configuration of a bipolar electrode current collector used in the bipolar battery shown in FIG. 1.
FIG. 5 is a simplified plan view showing the configuration of a bipolar battery of another embodiment.
FIG. 6 is a simplified plan view showing the configuration of a bipolar battery of another embodiment.
FIG. 7 is a simplified plan view showing the configuration of a bipolar battery of another embodiment.
FIG. 8A is a plan view showing a band-shaped metal foil including a plurality of bipolar electrode current collectors, in a step of forming the plurality of current collectors in the band-shaped metal foil by punching.
FIG. 8B is a plan view showing a band-shaped metal foil including a plurality of negative electrode current collectors, in a step of forming the plurality of current collectors in the band-shaped metal foil by punching.
FIG. 8C is a plan view showing a band-shaped metal foil including a plurality of positive electrode current collectors, in a step of forming the plurality of current collectors in the band-shaped metal foil by punching.
FIG. 9A is a plan view showing bipolar electrodes in a step of forming active material layers on the plurality of bipolar electrode current collectors formed in the band-shaped metal foil.
FIG. 9B is a plan view showing negative electrodes in a step of forming active material layers on the plurality of negative electrode current collectors formed in the band-shaped metal foil.
FIG. 9C is a plan view showing positive electrodes in a step of forming active material layers on the plurality of positive electrode current collectors formed in the band-shaped metal foil.
FIG. 10A is a plan view showing bipolar electrodes in a step in which sealing members are arranged at peripheral portions of the bipolar electrode current collectors.
FIG. 10B is a plan view showing negative electrodes in a step in which sealing members are arranged at peripheral portions of the negative electrode current collectors.
FIG. 10C is a plan view showing positive electrodes in a step in which sealing members are arranged at peripheral portions of the positive electrode current collectors.
FIG. 11 is a horizontal cross-sectional view showing a step of cutting the linked member of bipolar batteries.

### Best Mode for Carrying Out the Invention

It is an object of the present invention to provide a bipolar battery having a good productivity and a high reliability of the electrical connection with an apparatus when the battery is attached to various apparatuses. In the bipolar battery of the present invention, each of a positive electrode current collector, a negative electrode current collector, and a bipolar electrode current collector is provided with at least two projections. Furthermore, the projections extend outward from different positions on side faces in the thickness direction of the battery. With this configuration, the possibility that an electrical connection failure occurs between the bipolar battery and an external apparatus can be significantly reduced, and the reliability of the electrical connection between the bipolar battery and the external apparatus can be improved. Furthermore, it is possible to obtain a bipolar battery that is thin and still has various advantages of the present invention, by using a solid electrolyte, in particular, a polymer electrolyte as the electrolyte.

Hereinafter, the present invention will be described with reference to the drawings.

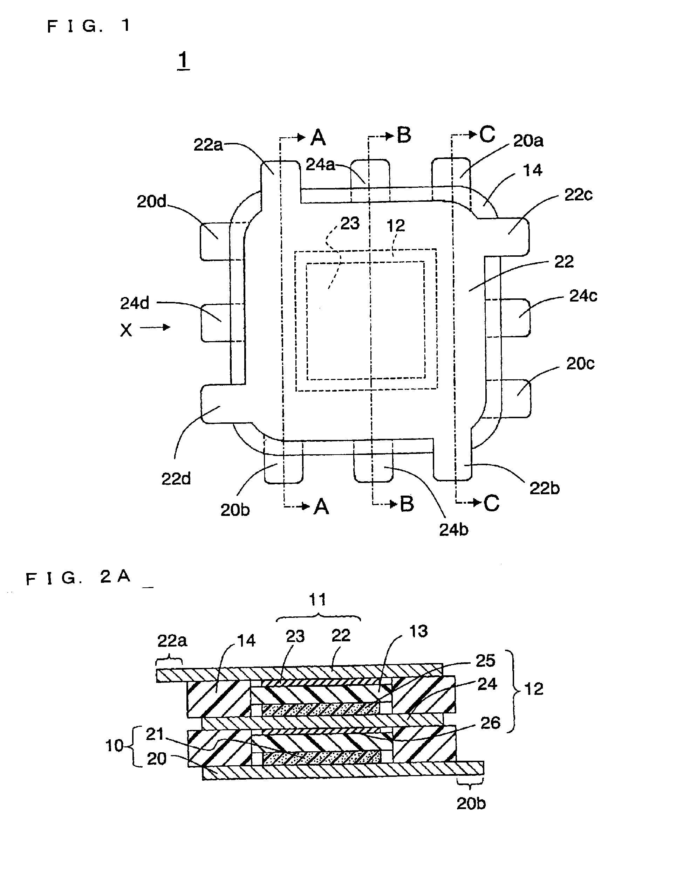

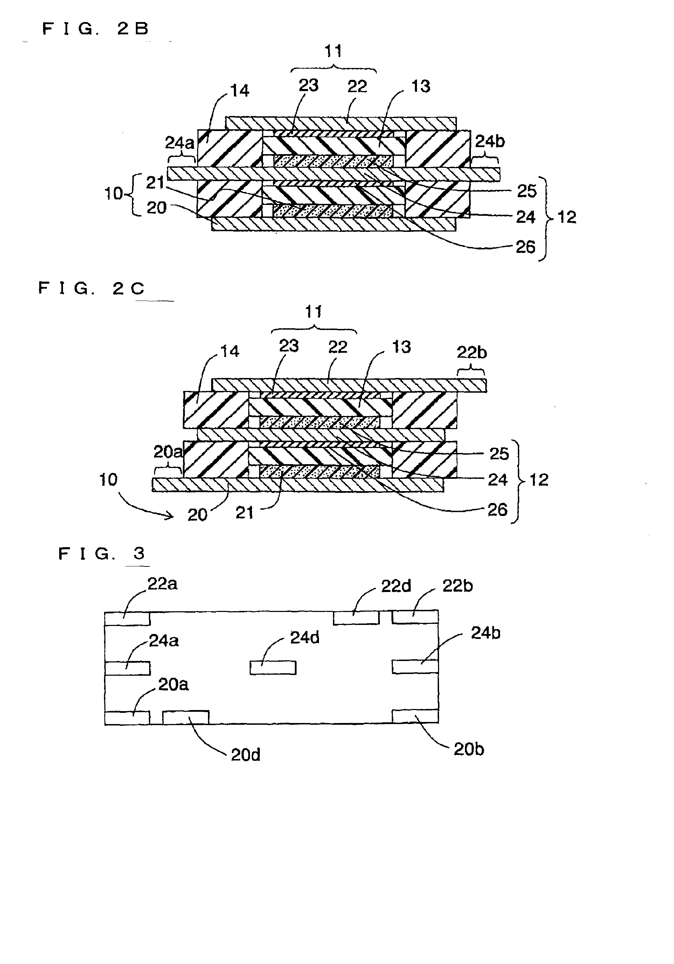

FIG. 1 is a schematic plan view showing the configuration of a bipolar battery 1 of an embodiment of the present invention. FIG. 2A is a schematic cross-sectional view showing the configuration of the bipolar battery 1 shown in FIG. 1 taken along cutting line A-A. FIG. 2B is a schematic cross-sectional view showing the configuration of the bipolar battery 1 shown in FIG. 1 taken along cutting line B-B. FIG. 2C is a schematic cross-sectional view showing the configuration of the bipolar battery 1 shown in FIG. 1 taken along cutting line C-C.

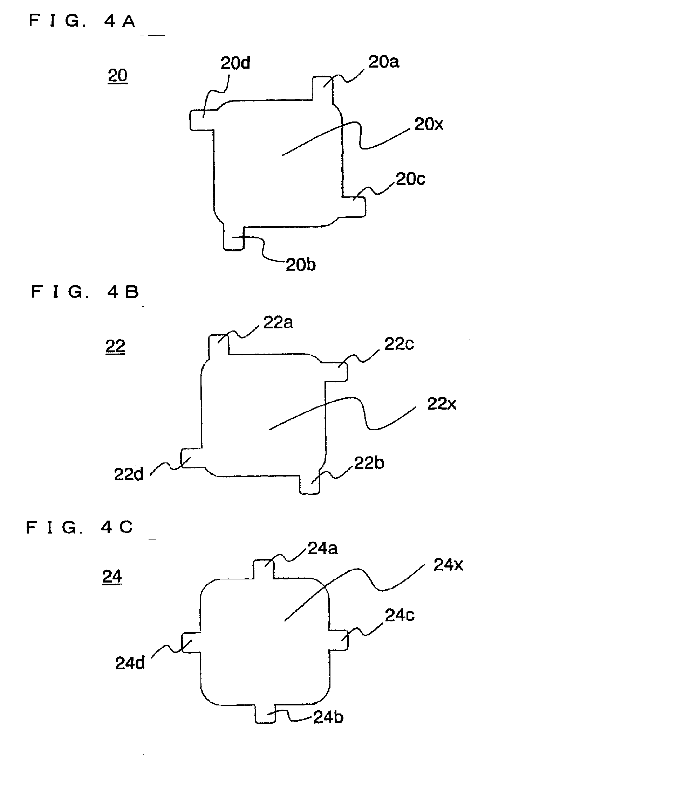

FIG. 3 is a side view of the bipolar battery 1 viewed in the direction of arrow X shown in FIG. 1. Here, in FIG. 3, constituent components other than projections 20a, 20b, 20d, 22a, 22b, 22d, 24a, 24b, and 24d are not shown. FIG. 4A is a plan view showing the configuration of a positive electrode current collector 20 used in the bipolar battery 1 shown in FIG. 1. FIG. 4B is a plan view showing the configuration of a negative electrode current collector 22 used in the bipolar battery 1 shown in FIG. 1. FIG. 4C is a plan view showing the configuration of a bipolar electrode current collector 24 (a current collector of a bipolar electrode 12) used in the bipolar battery 1 shown in FIG. 1.

The bipolar battery 1 is a thin solid-state battery that includes a positive electrode 10, a negative electrode 11, a bipolar electrode 12, electrolyte-containing separators 13, and sealing members 14, and that is substantially rectangular when viewed from above.

In the bipolar battery 1, the positive electrode 10, the bipolar electrode 12, and the negative electrode 11 are laminated in this order via the electrolyte-containing separator 13. That is to say, the layers are laminated such that a positive electrode active material layer 21 and a negative electrode active material layer 26 oppose each other, and a positive electrode active material layer 25 and a negative electrode active material layer 23 oppose each other, via the electrolyte-containing separator 13. In this manner, a first power generating element including the positive electrode active material layer 21, the electrolyte-containing separator 13, and the negative electrode active material layer 26, and a second power generating element including the positive electrode active material layer 25, the electrolyte-containing separator 13, and the negative electrode active material layer 23 are formed. Here, in this embodiment, one bipolar electrode 12 is laminated between the positive electrode 10 and the negative electrode 11, but there is no limitation to this. For example, two or more bipolar electrodes 12 may be laminated according to a nominal voltage that is to be supplied from the bipolar battery 1. In this case, the electrolyte-containing separator 13 is disposed also between a bipolar electrode 12 and its adjacent bipolar electrode 12. More specifically, two or more bipolar electrodes are laminated such that a positive electrode active material layer of one bipolar electrode and a negative electrode active material layer of another bipolar electrode oppose each other via the electrolyte-containing separator 13.

Furthermore, in the bipolar battery 1, a frame-like sealing member 14 is disposed between the peripheral portion of the positive electrode current collector 20 and the peripheral portion of the bipolar electrode current collector 24, and between the peripheral portion of the negative electrode current collector 22 and the peripheral portion of the bipolar electrode current collector 24. Accordingly, a sealed structure is obtained that seals a power generating element including the positive electrode active material layer 21, the electrolyte-containing separator 13, and the negative electrode active material layer 26, and a power generating element including the positive electrode active material layer 25, the electrolyte-containing separator 13, and the negative electrode active material layer 23. That is to say, each of the first power generating element and the second power generating element is sealed by the sealing member. Furthermore, since the positive electrode current collector 20 and the negative electrode current collector 22 have not only a current collecting function but also an outer cover function, there is no need to use an outer cover such as a lamination sheet, and the thickness of the bipolar battery can be further reduced. Accordingly, the bipolar battery becomes more flexible. Furthermore, the sealing member 14 is effective also for improving the mechanical strength of the bipolar battery 1.

Furthermore, the bipolar battery 1 is mainly **characterized in that** the bipolar battery includes projections 20a to 20d, 22a to 22d, and 24a to 24d projecting from peripheral portions of the current collectors. Here, the projections 20a to 20d are provided on the positive electrode current collector 20. The projections 22a to 22d are provided on the negative electrode current collector 22. The projections 24a to 24d are provided on the bipolar electrode current collector 24. These projections are used, for example, for establishing an electrical connection with an external apparatus to which a voltage is to be supplied from the bipolar battery 1 (hereinafter, simply referred to as "external apparatus"). Furthermore, these projections can be used also for monitoring the voltage of each unit cell.

The projections 20a to 20d, 22a to 22d, and 24a to 24d are arranged so as to extend outward from the bipolar battery 1 at different positions on side faces in the thickness direction of the bipolar battery 1. Furthermore, the projections 20a to 20d, 22a to 22d, and 24a to 24d are arranged so as not to overlap each other in the thickness direction of the bipolar battery 1. That is to say, none of the projections 20a to 20d, 22a to 22d, and 24a to 24d overlaps another projection when viewed in the thickness direction of the bipolar electrode 1, for example, when viewed from above from the positive electrode side. Here, the thickness direction of the bipolar battery 1 refers to a direction in which the positive electrode, the bipolar electrode, and the negative electrode are laminated.

Furthermore, three projections extend in each of four directions of the bipolar battery 1. That is to say, three projections project in each of four directions that are perpendicular to the thickness direction of the battery and that are different from each other. In the case of the bipolar battery 1 in FIG. 1, when four projecting directions are viewed in the thickness direction of the bipolar battery 1 (direction in which the positive electrode, the bipolar electrode, and the negative electrode are laminated), two projecting directions that are adjacent to each other in the clockwise direction cross each other at right angles. More specifically, in the section of FIG. 1, the projections 20a, 22a, and 24a extend upward, the projections 20b, 22b, and 24b extend downward, the projections 20c, 22c, and 24c extend rightward, and the projections 20d, 22d, and 24d extend leftward. That is to say, the projections 20a, 22a, and 24a and the projections 20b, 22b, and 24b extend in opposite directions, and the projections 20c, 22c, and 24c and the projections 20d, 22d, and 24d extend in opposite directions. Furthermore, a direction parallel to a direction in which the projections 20a, 22a, and 24a and the projections 20b, 22b, and 24b extend and a direction parallel to a direction in which the projections 20c, 22c, and 24c and the projections 20d, 22d, and 24d extend are perpendicular to each other.

In this embodiment, 12 projections 20a to 20d, 22a to 22d, and 24a to 24d are provided, but there is no limitation to this. The number of projections included in each of the positive electrode current collector 20, the negative electrode current collector 22, and the bipolar electrode current collector 24 may be two or more, preferably four or more, and these configurations also can achieve the above-described object of the present invention. Here, in the case where a horizontal cross-section of the bipolar battery is rectangular or substantially rectangular, and four projections are arranged on each current collector, one projection is preferably disposed on each of the four sides of the bipolar battery 1.

Here, the bipolar battery 1 is electrically connected with an external apparatus using two or more projections, preferably four or more projections of the projections 20a to 20d and 22a to 22d of the current collectors 20 and 22 of the positive electrode 10 and the negative electrode 11 positioned at the outermost layers in the thickness direction of the bipolar battery 1, and the projections 24a to 24d of the current collector 24 of the bipolar electrode 12 positioned at the intermediate layer.

In the case where each of the positive electrode current collector 20, the negative electrode current collector 22, and the bipolar electrode current collector 24 is provided with two or more projections as in this embodiment, a connection with various external apparatuses becomes possible, and the range in which the bipolar battery 1 can be applied significantly increases. For example, in the case where the bipolar battery 1 is connected with an external apparatus using the projections 24a to 24d of the bipolar electrode 12, a voltage that is to be supplied from the bipolar battery 1 can be adjusted lower than the case where the bipolar battery 1 is connected with an external apparatus using only the projections 20a to 20d and 22a to 22d of the positive electrode 10 and the negative electrode 11.

In the case where a plurality of projections are provided in this manner, two or more projections and an external apparatus can be electrically connected. As a result, for example, even if an electrical connection failure occurs between any one projection and an external apparatus, the electrical connection is kept with the other projections. Accordingly, the bipolar battery 1 can stably supply a voltage to the external apparatus, and realizes a very high reliability as a drive power source.

Furthermore, in the case where the projections are arranged at different positions, more preferably, at positions where the projections do not overlap each other in the thickness direction of the bipolar battery 1, the reliability of the electrical connection with an external apparatus is further improved. That is to say, if the projections are arranged at the same position, for example, when the external apparatus is dropped or subjected to a shock or the like, all projections may be simultaneously deformed, bent, or broken, and an electrical connection failure may occur. On the other hand, if the projections are arranged at different positions, the possibility that an electrical connection failure occurs can be further reduced. Furthermore, in the case where the projections are arranged on four directions of the bipolar battery 1, the effect of reducing the possibility that an electrical connection failure occurs is further improved.

Furthermore, in the case where at least part of the surface of the projections are covered by a sealing member, an effect of improving the mechanical strength of the projections, suppressing a short circuit caused by the projections brought into contact with each other, and the like can be obtained.
Furthermore, in the case where the tip ends of the projections have angled portions, the angled portions are preferably chamfered. The angled portions are more preferably chamfered in the shape of arcs. With this configuration, when the bipolar battery is connected with a circuit of an external apparatus, a damage of the circuit caused by the angled portions of the projections caught by a portion irrelevant to the connection with the circuit of the external apparatus can be suppressed.

Hereinafter, the constituent components of the bipolar battery 1 will be described in detail.
The positive electrode 10 includes the positive electrode current collector 20 and the positive electrode active material layer 21.
As described above, the positive electrode current collector 20 has both of a current collecting function and an outer cover function. The positive electrode current collector 20 is a plate-shaped member made of metal, and includes a current collector body 20x that is substantially rectangular when viewed from above and four projections 20a to 20d as shown in FIG. 4A.

The projections 20a to 20d are formed so as to extend outward from four corners of the current collector body 20x. More specifically, the projections 20a and 20b are arranged near both end portions of one diagonal line on the current collector body 20x, and extend in opposite directions in the vertical direction in the section of FIG. 4A. Furthermore, the projections 20c and 20d are arranged near both end portions of the other diagonal line on the current collector body 20x, and extend in opposite directions that are substantially perpendicular to the directions in which the projections 20a and 20b extend. That is to say, the projections 20a to 20d extend in four directions of the positive electrode current collector 20.

Each of the projections 20a to 20d is substantially rectangular when viewed from above, and a tip end thereof has two angled portions. These angled portions are chamfered in the shape of arcs. Here, in this embodiment, projections substantially rectangular when viewed from above are provided, but there is no limitation to this, and the projections may have any shape as long as the electrical connection with an external apparatus is possible. Specific examples of such a shape include a semicircle, a semi-ellipse, and a trilateral. Here, the shape of the projections may be any shape also in the negative electrode current collector 22 and the bipolar electrode current collector 24.

The positive electrode current collector 20 may be made of a material ordinarily used in the field of bipolar batteries, and examples thereof include aluminum-based foil and stainless steel foil having a thickness of approximately 10 to 30 µm. Here, the aluminum-based foil refers to, for example, aluminum foil, aluminum alloy foil, or the like.

The positive electrode active material layer 21 contains a positive electrode active material, a conductive agent, a binder, and the like, and is formed on one surface in the thickness direction of the positive electrode current collector 20.
Examples of the positive electrode active material include materials ordinarily used in the field of solid-state batteries. Specific examples thereof include manganese dioxide, fluorinated carbon such as (CF)ₘ and (C₂F)ₘ, metal disulfide such as TiS₂, MoS₂, and FeS₂, lithium-containing composite oxide, vanadium oxide and lithium compounds thereof, niobium oxide and lithium compounds thereof, organic conductive substance-containing conjugated polymers, Chevrel phase compounds, and olivine-based compounds. The positive electrode active material may be used alone or in a combination of two or more.

Examples of the lithium-containing composite oxide that may be used include materials represented by LiₓₐCoO₂, LiₓₐNiO₂, LiₓₐMnO₂, LiₓₐCO_{y}Ni_{1-y}O₂, LiₓₐCo_{y}M_{1-y}O₂, LiₓₐN_{1-y}MyO₂, Li_{xb}Mn₂O₄, and Li_{xb}Mn_{2-y}M_{y}O₄ (where M is at least one element selected from the group consisting of Na, Mg, Sc, Y, Mn, Fe, Co, Ni, Cu, Zn, Al, Cr, Pb, Sb, and B, xa = 0 to 1.2, xb = 0 to 2.0, y = 0 to 0.9, and z = 2.0 to 2.3). Here, the xa value and the xb value in the composition formulae above are values before starting charge and discharge, and vary depending on charge and discharge.

Among these materials, manganese dioxide is preferable in consideration of a preferable combination with an electrolyte (in particular, a polymer electrolyte described later). The manganese dioxide is advantageous, for example, in that its reaction potential substantially matches an electrochemically stable region (potential) of a polymer electrolyte, in that a theoretical capacity per mass in the case of one-electron reaction is as high as 308 mAh/g, and in that it is inexpensively available.

Furthermore, the mean particle size of the positive electrode active material is preferably 0.1 to 20 µm. Accordingly, when a positive electrode material mixture slurry described later is applied to the positive electrode current collector 20, non-uniform application that causes streaks or the like is suppressed, non-uniformity in the application amount and thus the electrode capacity per unit area is reduced, and the thickness of the positive electrode 10 can be adjusted to 50 µm or less.

The conductive agent may be a material ordinarily used in the field of solid-state batteries, and examples thereof include graphites such as natural graphite and artificial graphite, carbon blacks such as acetylene black, ketjen black, channel black, furnace black, lamp black, and thermal black, conductive fibers such as carbon fiber and metal fiber, metal powders such as aluminum powder, conductive whiskers such as zinc oxide whisker and conductive potassium titanate whisker, conductive metal oxides such as titanium oxide, and organic conductive materials such as a phenylene derivative. The conductive agent may be used alone or in a combination of two or more.

The binder may be a polymer electrolyte or any other binder. Among polymer electrolytes, a dry polymer electrolyte is preferable. Furthermore, the polymer electrolytes and other binders may be used in a combination. Polymer electrolytes are preferably used as the binder because ions can easily reach from a surface of the positive electrode active material layer 21 to a deep portion (a portion near the positive electrode current collector 20).

Binders other than the polymer electrolytes may be a material ordinarily used in the field of batteries, and examples thereof include polyvinylidene fluoride (PVdF), polytetrafluoroethylene, polyethylene, polypropylene, aramid resin, polyamide, polyimide, polyamide imide, polyacrylonitrile, polyacrylic acid, poly(methyl acrylate), poly(ethyl acrylate), poly(hexyl acrylate), polymethacrylic acid, poly(methyl methacrylate), poly(ethyl methacrylate), poly(hexyl methacrylate), polyvinyl acetate, polyvinylpyrrolidone, polyether, polyether sulphone, polyhexafluoropropylene, styrene butadiene rubber, and carboxymethyl cellulose. The binder may be used alone or in a combination of two or more.

The positive electrode active material layer 21 is formed, for example, by a method in which a positive electrode material mixture slurry is applied to a surface of the positive electrode current collector 20, dried, and, if necessary, rolled. Accordingly, the positive electrode 10 can be obtained. The positive electrode material mixture slurry can be prepared, for example, by dispersing a positive electrode active material, a binder, a conductive agent, and the like in a dispersion medium. Examples of the dispersion medium include N-methyl-2-pyrrolidone, tetrahydrofuran, and dimethylformamide.

The negative electrode 11 includes the negative electrode current collector 22 and the negative electrode active material layer 23.
As described above, the negative electrode current collector 22 has both of a current collecting function and an outer cover function. The negative electrode current collector 22 is a plate-shaped member made of metal, and includes a current collector body 22x that is substantially rectangular when viewed from above and four projections 22a to 22d as shown in FIG. 4B.

The projections 22a to 22d are formed so as to extend outward from four corners of the current collector body 22x. More specifically, the projections 22a and 22b are arranged near both end portions of one diagonal line on the current collector body 22x, and extend in opposite directions in the vertical direction in the section of FIG. 4B. Furthermore, the projections 22c and 22d are arranged near both end portions of the other diagonal line on the current collector body 22x, and extend in opposite directions that are substantially perpendicular to the directions in which the projections 22a and 22b extend. That is to say, the projections 22a to 22d extend in four directions of the negative electrode current collector 22.

Furthermore, the projections 22a to 22d are formed at positions different from the projections 20a to 20d of the positive electrode current collector 20 on side faces in the thickness direction of the bipolar battery 1. Furthermore, in the thickness direction of the bipolar battery 1, the projections 22a to 22d have no portion that overlaps the projections 20a to 20d. Furthermore, each of the projections 22a to 22d is substantially rectangular when viewed from above, and a tip end thereof has two angled portions. These angled portions are chamfered in the shape of arcs.

The negative electrode current collector 22 may be made of a material ordinarily used in the field of bipolar batteries, and examples thereof include copper-based foil and stainless steel foil having a thickness of approximately 10 to 30 µm. Here, the copper-based foil refers to, for example, copper foil, copper alloy foil, or the like.

The negative electrode active material layer 23 is formed on one surface in the thickness direction of the negative electrode current collector 22, and contains a negative electrode active material and the like. The negative electrode active material may be a material ordinarily used in the field of bipolar batteries, and examples thereof include metallic lithium and lithium alloy. Examples of the lithium alloy include Li-Si alloy, Li-Sn alloy, Li-Al alloy, Li-Ga alloy, Li-Mg alloy, and Li-In alloy. The negative electrode active material layer 23 can be formed, for example, by attaching metal foil made of metallic lithium or lithium alloy to a surface of the negative electrode current collector 22.

The bipolar electrode 12 includes the bipolar electrode current collector 24, the positive electrode active material layer 25, and the negative electrode active material layer 26.
The positive electrode active material layer 25 is formed on one surface in the thickness direction of the bipolar electrode current collector 24, and the negative electrode active material layer 26 is formed on the other surface in the thickness direction. The bipolar electrode current collector 24 is a plate-shaped member made of metal, and includes a current collector body 24x that is substantially rectangular when viewed from above and four projections 24a to 24d as shown in FIG. 4C.

The projections 24a to 24d are formed so as to extend outward substantially from middle portions of four sides of the current collector body 24x. The projections 24a and 24b extend in opposite directions, and the projections 24c and 24d extend in opposite directions that are substantially perpendicular to the directions in which the projections 24a and 24b extend. That is to say, the projections 24a to 24d extend in four directions of the bipolar electrode current collector 24.

Furthermore, the projections 24a to 24d are formed at positions different from the projections 20a to 20d of the positive electrode current collector 20 and the projections 22a to 22d of the negative electrode current collector 22 on side faces in the thickness direction of the bipolar battery 1. Furthermore, in the thickness direction of the bipolar battery 1, the projections 24a to 24d have no portion that overlaps the projections 20a to 20d or 22a to 22d. Furthermore, each of the projections 24a to 24d is substantially rectangular when viewed from above, and a tip end thereof has two angled portions. These angled portions are chamfered in the shape of arcs.

The bipolar electrode current collector 24 may be made of a material ordinarily used in the field of bipolar batteries, and examples thereof include stainless steel foil and cladding material having a thickness of approximately 10 to 30 µm. Examples of the cladding material include a laminate in which a copper-based layer and an aluminum-based layer are laminated.
The positive electrode active material layer 25 has a configuration similar to that of the positive electrode active material layer 21. Furthermore, the negative electrode active material layer 26 has a configuration similar to that of the negative electrode active material layer 23.

The electrolyte-containing separator 13 is disposed so as to be interposed between the positive electrode active material layer 21 and the negative electrode active material layer 26 and between the positive electrode active material layer 25 and the negative electrode active material layer 23. The electrolyte-containing separator 13 may be a solid electrolyte, or may be a porous base material impregnated with a liquid electrolyte.

There is no particular limitation on the type of the solid electrolyte, and both of an inorganic solid electrolyte and an organic solid electrolyte may be used. In the case where an inorganic solid electrolyte is used, there is no risk of liquid leakage, and, thus, the battery is advantageous in that the thickness and the size can be reduced, and in that the battery has a high safety and a high reliability. Furthermore, also in the case where an organic solid electrolyte, in particular, a polymer electrolyte is used, the battery is advantageous in that the thickness and the size can be reduced, and in that the battery has a high safety and a high reliability. Furthermore, there is also the advantage that a flexible and thin battery can be obtained.

The inorganic solid electrolyte may be a known material, and examples thereof include a sulfide-based inorganic solid electrolyte, an oxide-based inorganic solid electrolyte, and other lithium-based inorganic solid electrolytes. Specific examples of the sulfide-based inorganic solid electrolyte include (Li₃PO₄)ₓ-(Li₂S)_{y}-(SiS₂)_{z} glass, (Li₂S)ₓ-(SiS₂)_{y}, (Li₂S)ₓ-(P₂S₅)_{y}, Li₂S-P₂S₅, and thio-LISICON.

Furthermore, specific examples of the oxide-based inorganic solid electrolyte include NASICON-type electrolytes such as LiTi₂(PO₄)₃, LiZr₂(PO₄)₃, and LiGe₂(PO₄)₃, and perovskite-type electrolytes such as (La_{0.5+x}Li_{0.5-3x})TiO₃. Specific examples of other lithium-based inorganic solid electrolytes include LiPON, LiNbO₃, LiTaO₃, Li₃PO₄, LiPO₄₋ₓNₓ(x satisfies 0 < x ≤ 1), LiN, Lil, and LISICON. Furthermore, glass ceramics obtained by precipitating inorganic solid electrolyte crystals also may be used as the solid electrolyte.

Here, the electrolyte-containing separator 13 made of the inorganic solid electrolyte can be formed by methods such as vapor deposition, sputtering, laser ablation, gas deposition, aerosol deposition, or the like. In particular, gas deposition and aerosol deposition are preferable, because a membrane can be formed at a high speed.

The organic solid electrolyte also may be a known material, and examples thereof include a polymer electrolyte. Examples of the polymer electrolyte include a dry polymer electrolyte and a gel electrolyte.

Examples of the polymer electrolyte that may be used include materials ordinarily used in the field of bipolar batteries. Among these materials, a dry polymer electrolyte (1) that contains at least a polymer containing an electron-donating element in its skeleton and a lithium salt is preferable. An electron-donating element can generate an intensive interaction that corresponds to an interaction between lithium ions and anions in the dry polymer electrolyte (1). With this sort of action of the electron-donating element, part of a lithium salt is dissociated into lithium ions and anions in the dry polymer electrolyte (1). The dissociated lithium ion is coordinated to the electron-donating element, and moves in the polymer structure or on the polymer chain. It seems that lithium ions can move in the polymer mainly due to a segmental motion of the polymer chain. Accordingly, an excellent ionic conduction is realized.

The polymer containing an electron-donating element in its skeleton may be used as a matrix polymer. Examples of the polymer containing an electron-donating element in its skeleton include a polymer containing an electron-donating oxygen in one or both of a main chain and a side chain. Here, examples of the electron-donating oxygen include ether oxygen and ester oxygen. Specific examples of the matrix polymer include polyethylene oxide, polypropylene oxide, a copolymer of ethylene oxide and propylene oxide, a polymer having an ethylene oxide unit or a propylene oxide unit, and polycarbonate. In addition to the above-described materials, further examples of the matrix polymer contained in the dry polymer electrolyte include a polyether having a low phase transition temperature (Tg), an amorphous vinylidene fluoride copolymer, and a mixture of different polymers.

The lithium salt may be a material ordinarily used in the field of batteries, and examples thereof include LiClO₄, LiBF₄, LiPF₆, LiAlCl₄, LiSbF₆, LiSCN, LiCF₃SO₃, LiAsF₆, lithium lower aliphatic carboxylate, LiCl, LiBr, Lil, chloroboran lithium, lithium tetraphenylborate, LiN(CF₃SO₂)₂, and LiN(C₂F₅SO₂)₂. The lithium salt may be used alone or in a combination of two or more.

The dry polymer electrolyte can be prepared, for example, by adding a lithium salt to a solution containing a matrix polymer and an organic solvent to obtain a polymer electrolyte solution, applying the polymer solution to a predetermined position, and then drying the resultant. Here, there is no particular limitation on the organic solvent, and a known material may be used as long as it can dissolve the matrix polymer, and are inactive against the matrix polymer and the lithium salt. Examples thereof include nitriles such as acetonitrile and glymes such as methyl monoglyme.

The gel electrolyte may specifically contain, for example, a matrix polymer and a non-aqueous electrolyte held by the matrix polymer. Here, examples of the matrix polymer for the gel electrolyte include a polyethylene oxide derivative, a polymer containing a polyethylene oxide derivative, a polypropylene oxide derivative, a polymer containing a polypropylene oxide derivative, polyphosphazen, a polymer containing an ionically dissociable group, a phosphoric acid ester polymer, a polyvinylpyridine derivative, a bisphenolAderivative, polyacrylonitrile, polyvinylidene fluoride, and a fluorine rubber. The non-aqueous electrolyte will be described later.

In the case where the electrolyte-containing separator 13 is made of an organic solid electrolyte, the electrolyte-containing separator 13 may contain not only the above-described components but also other components as long as its object is not impaired. Examples of other components include an inorganic filler and a solid crystalline complex of lithium salts and glymes (hereinafter, simply referred to as "crystalline complex"). The inorganic filler, for example, improves the mechanical strength of the organic solid electrolyte, the uniformity of membrane properties, the ionic conduction, and the like. There is no particular limitation on the inorganic filler, and examples thereof include micron-order or nano-order fine particles of alumina and silica. The crystalline complex, for example, reduces the interaction between lithium ions and polymer chains, and further improves the ionic conduction of the organic solid electrolyte.

Furthermore, if the electrolyte-containing separator 13 contains a solid electrolyte, the electrolyte-containing separator 13 may be supported by a supporting member. As the supporting member, a porous sheet may be used. Examples of the porous sheet include non-woven fabrics made of synthetic resins such as polypropylene, polyethylene, polyethylene terephthalate, polyphenylene sulfide, cellulose, or the like, and microporous films of polypropylene or polyethylene. For example, an electrolyte-containing separator 13 formed in one piece with a supporting member can be produced by impregnating a porous sheet with a polymer electrolyte solution, and then removing the solvent.

As described above, as the electrolyte-containing separator 13, a porous base material impregnated with a liquid electrolyte may be used. Examples of the porous base material include a sheet material or film material having a predetermined ionic permeability, a predetermined mechanical strength, a predetermined insulation performance. Specific examples of the porous base material include a porous sheet material and film material, such as a microporous membrane, a woven fabric, or a non-woven fabric. The microporous membrane may be a single layer membrane or may be a multi-layer membrane (composite membrane). The single layer membrane is made of one type of material. The multi-layer membrane (composite membrane) is a laminate of single layer membranes made of one type of material, or a laminate of single layer membranes made of different materials.

The porous base material may be made of various resin materials. Among these materials, polyolefins such as polyethylene or polypropylene are preferable in consideration of durability, shut-down function, battery safety, and the like. Here, the shut-down function refers to a function of closing through holes when the battery is abnormally heated, thereby suppressing ion permeation, and blocking a reaction in the battery. If necessary, two or more layers of microporous membrane, woven fabric, non-woven fabric, or the like may be laminated to form the porous base material. The thickness of the porous base material is ordinarily 10 to 300 µm, preferably 10 to 40 µm, more preferably 10 to 30 µm, and further more preferably 10 to 25 µm. Furthermore, the porosity of the porous base material is preferably 30 to 70%, more preferably 35 to 60%. Here, the porosity refers to a ratio of the total volume of pores present in the porous base material with respect to the volume of the porous base material.

As the liquid electrolyte, a non-aqueous electrolyte may be used. The non-aqueous electrolyte contains a solute (supporting salt), a non-aqueous solvent, and, if necessary, various additives. The solute is dissolved typically in the non-aqueous solvent.
The solute may be a material ordinarily used in this field, and examples thereof include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, Lil, LiBCl₄, borates, and imide salts.

Examples of the borates include lithium bis(1,2-benzenediolato(2-)-O,O')borate, lithium bis(2,3-naphthalenediolato(2-)-O,O')borate, lithium bis(2,2'-biphenyldiolato(2-)-O,O')borate, and lithium bis(5-fluoro-2-olate-1-benzenesulfonato-O,O')borate.

Examples of the imide salts include lithium bis(trifluoromethanesulfonyl)imide ((CF₃SO₂)₂NLi), lithium(trifluoromethanesulfonyl)(nonafluorobutanesulfonyl)imide ((CF₃SO₂)(C₄F₉SO₂)NLi), and lithium bis(pentafluoroethanesulfonyl)imide ((C₂F₅SO₂)₂NLi). The solute may be used alone or, if necessary, in a combination of two or more. The amount of solute dissolved in the non-aqueous solvent is desirably in the range of 0.5 to 2 mol/L.

The non-aqueous solvent may be a solvent ordinarily used in this field, and examples thereof include cyclic carbonic acid ester, chain carbonic acid ester, and cyclic carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The non-aqueous solvent may be used alone or in a combination of two or more.

Examples of the additives include a material that improves a charge/discharge efficiency and a material that inactivates the battery. The material that improves a charge/discharge efficiency, for example, decomposes on a negative electrode to form a membrane having a high lithium ion conductivity, and improves a charge/discharge efficiency. Specific examples of this sort of material include vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate (VEC), and divinyl ethylene carbonate. These materials may be used alone or in a combination of two or more. Among these materials, it is preferable to use at least one selected from vinylene carbonate, vinyl ethylene carbonate, and divinyl ethylene carbonate. Here, in these compounds, part of hydrogen atoms thereof may be substituted with fluorine atoms.

The material that inactivates the battery, for example, decomposes to form a membrane on the electrode surface when the battery is overcharged, and thus inactivates the battery. Examples of this sort of material include a benzene derivative. Examples of the benzene derivative include a benzene compound containing a phenyl group and a cyclic compound group adjacent to the phenyl group. Preferable examples of the cyclic compound group include a phenyl group, a cyclic ether group, a cyclic ester group, a cycloalkyl group, and a phenoxy group. Specific examples of the benzene derivative include cyclohexyl benzene, biphenyl, and diphenyl ether. The benzene derivative may be used alone or in a combination of two or more. Here, the amount of benzene derivative contained in the non-aqueous electrolyte is preferably 10 parts by volume or less with respect to 100 parts by volume of non-aqueous solvent.

In particular, in order to prevent liquid junction, a solid electrolyte is preferably used as the electrolyte-containing separator 13. When a solid electrolyte is used as the electrolyte-containing separator 13, the safety of the bipolar battery can be further improved. Furthermore, the bipolar battery 1 can reliably output a voltage corresponding to the number of bipolar electrodes 12 laminated. Here, polymer electrolytes are preferable as the solid electrolyte. Among the polymer electrolytes, a dry polymer electrolyte not containing a liquid component is particularly preferable.
Here, the electrolyte-containing separator 13 may be a porous base material impregnated with a liquid electrolyte as described above. The structure of the present invention (projections) can be applied also to this sort of bipolar battery. Accordingly, the reliability of the electrical connection with an external apparatus increases, and the productivity is improved.

The sealing member 14 is substantially rectangular when viewed from above, and is a plate-shaped member in which four corners are formed in the shape of arcs. Furthermore, a rectangular hole (not shown) that passes through in the thickness direction is formed at the center of the sealing member 14. For example, in the case of the sealing member 14 disposed between the positive electrode 10 and the bipolar electrode 12, the positive electrode active material layer 21, the negative electrode active material layer 26, and the electrolyte-containing separator 13 are inserted into this hole. Furthermore, the sealing member 14 has an outer peripheral size larger than that of the positive electrode current collector 20, the negative electrode current collector 22, and the bipolar electrode current collector 24 as shown in FIG. 1. Accordingly, a short circuit between the peripheral portions of the current collectors 20, 22, and 24 can be substantially reliably prevented.

In this embodiment, the sealing member 14 has an outer peripheral size larger than that of the current collectors 20, 22, and 24, but there is no limitation to this, and the sealing member 14 may have an outer peripheral size similar to that of the current collectors 20, 22, and 24. The sealing member 14 may be made of a material ordinarily used in the field of batteries, and examples thereof include insulating synthetic resins such as modified polyethylene, modified polypropylene, polyvinyl acetate, polyvinyl butyral, acrylic resin, polyisobutylene polyamide, and a copolymer of ethylene and vinyl acetate or acrylic acid ester. The thickness of the sealing member is set to approximately 10 to 300 µm.

In the bipolar battery 1, the positive electrode current collector 20 and the negative electrode current collector 22 made of extremely thin metal foil are used also as outer covers as described above, and, thus, the thickness of the bipolar battery can be further smaller than that of conventional bipolar batteries. Furthermore, the bipolar battery 1 also has an excellent flexibility.

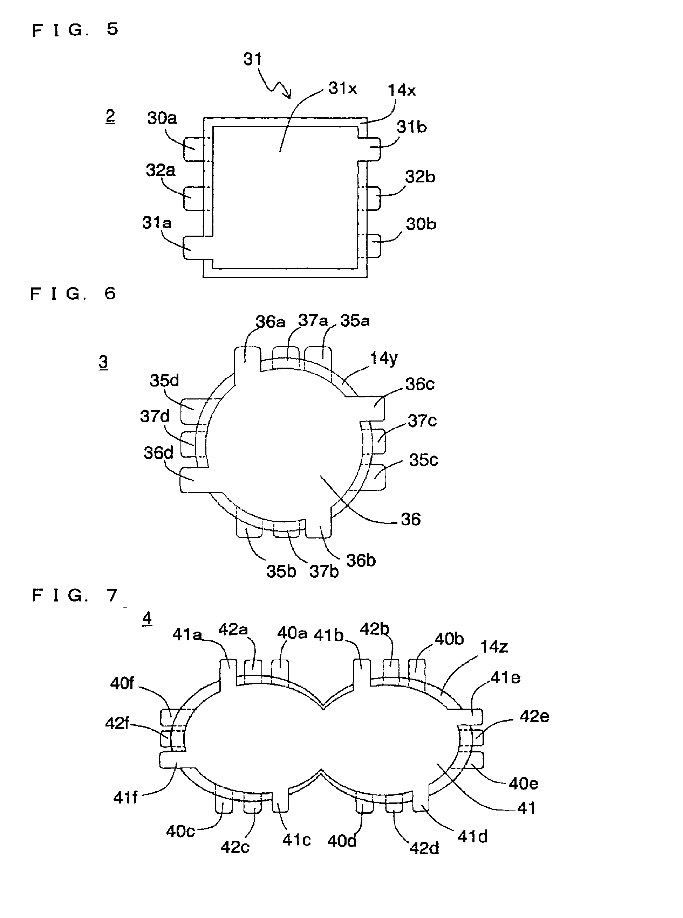

FIGS. 5 to 7 are simplified plan views showing the configuration of bipolar batteries 2 to 4 of other embodiments. The bipolar battery 2 shown in FIG. 5 is similar to the bipolar battery 1, and the corresponding constituent components are not shown and a description thereof has been omitted. The bipolar battery 2 is **characterized in that** a positive electrode current collector (not shown), a negative electrode current collector 31, and a bipolar electrode current collector (not shown) are rectangular when viewed from above, in that each of the collectors has two projections, and in that a sealing member 14x is rectangular when viewed from above. The positive electrode current collector is rectangular when viewed from above, and has projections 30a and 30b. The projections 30a and 30b are formed near both end portions of one diagonal line on two sides that oppose each other of the positive electrode current collector, and extend in opposite directions.

The negative electrode current collector 31 includes a current collector body 31x and projections 31a and 31b. The current collector body 31x is rectangular, and the projections 31a and 31b are formed near both end portions of one diagonal line on two sides that oppose each other of the current collector body 31x, and extend in opposite directions. The two sides of the current collector body 31x on which the projections 31a and 31b are formed are respectively on the same sides as the two sides of the positive electrode current collector on which the projections 30a and 30b are formed. Furthermore, when viewed in the thickness direction of the bipolar battery 2, the projections 31a and 31b are arranged so as to oppose the projections 30a and 30b via projections 32a and 32b (described later).

The bipolar electrode current collector is also rectangular when viewed from above, and has projections 32a and 32b. The projections 32a and 32b are formed so as to extend in opposite directions substantially from middle portions of two sides that oppose each other of the bipolar electrode current collector. The two sides of the bipolar electrode current collector on which the projections 32a and 32b are formed are on the same sides as the two sides of the positive electrode current collector on which the projections 30a and 30b are formed.

In this manner, the bipolar battery 2 is configured such that three projections 30a, 31a, and 32a extend outward from one of sides that oppose each other, and three projections 30b, 31 b, and 32b extend outward from the other side. Furthermore, the projections 30a, 31a, and 32a and the projections 30b, 31b, and 32b are configured so as to extend in opposite directions. The bipolar battery 2 having this sort of configuration also can obtain an effect similar to that of the bipolar battery 1.

The bipolar battery 3 shown in FIG. 6 is similar to the bipolar battery 1, and the corresponding constituent components are not shown and a description thereof has been omitted. The bipolar battery 3 has a configuration similar to that of the bipolar battery 1, except that a positive electrode current collector (not shown), a negative electrode current collector 36, a bipolar electrode current collector (not shown), and a sealing member 14y are circular when viewed from above. That is to say, the positive electrode current collector has four projections 35a to 35d that extend in four directions of the bipolar battery 3. The negative electrode current collector 36 has four projections 36a to 36d that extend in four directions of the bipolar battery 3. The bipolar electrode current collector has four projections 37a to 37d that extend in four directions of the bipolar battery 3.

The projections 35a, 36a, and 37a and the projections 35b, 36b, and 37b are formed so as to extend in opposite directions in the vertical direction in the section of FIG. 6. The projections 35c, 36c, and 37c and the projections 35d, 36d, and 37d are formed so as to extend in opposite directions that are substantially perpendicular to the direction in which the projections 35a, 36a, and 37a extend. These 12 projections are formed at different positions on side faces in the thickness direction of the bipolar battery 3. Furthermore, these 12 projections are formed so as not to overlap each other in the thickness direction of the bipolar battery 3. The bipolar battery 3 having this sort of configuration also can obtain an effect similar to that of the bipolar battery 1.

The bipolar battery 4 shown in FIG. 7 is similar to the bipolar battery 1, and the corresponding constituent components are not shown and a description thereof has been omitted. The bipolar battery 4 has a configuration similar to that of the bipolar battery 1, except that a positive electrode current collector (not shown), a negative electrode current collector 41, a bipolar electrode current collector (not shown), and a sealing member 14z have a shape obtained by linking two ellipses in the longitudinal direction, and in that 18 projections are provided.

The positive electrode current collector has six projections 40a to 40f that extend in four directions of the bipolar battery 4. The negative electrode current collector 41 has six projections 41a to 41f that extend in four directions of the bipolar battery 4. The bipolar electrode current collector has six projections 42a to 42f that extend in four directions of the bipolar battery 4.

Among these projections, the projections 40a, 41a, and 42a and the projections 40b, 41 b, and 42b are arranged at one end portion in the transverse direction (width direction) of the bipolar battery 4, and the projections 40c, 41 c, and 42c and the projections 40d, 41d, and 42d are arranged at the other end portion in the transverse direction (width direction) of the bipolar battery 4. The projections 40a, 41 a, and 42a and the projections 40b, 41 b, and 42b, and the projections 40c, 41 c, and 42c and the projections 40d, 41d, and 42d extend in opposite directions. Furthermore, the projections 40e, 41e, and 42e are arranged at one end portion in the longitudinal direction of the bipolar battery 4, and the projections 40f, 41f, and 42f are arranged at the other end portion in the longitudinal direction of the bipolar battery 4. The projections 40e, 41 e, and 42e and the projections 40f, 41f, and 42f extend in opposite directions. The bipolar battery 4 having this sort of configuration also can obtain an effect similar to that of the bipolar battery 1.

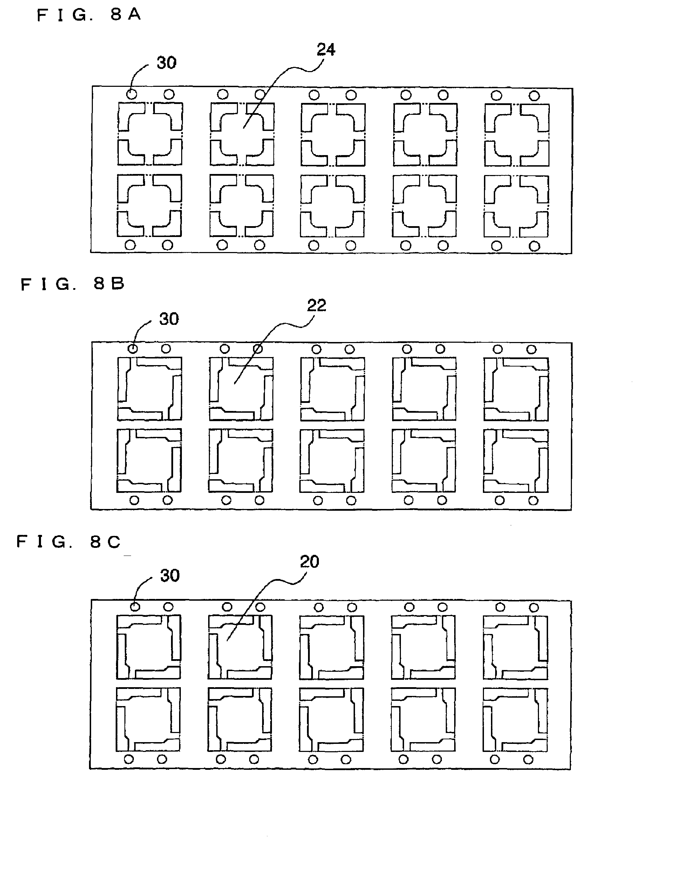

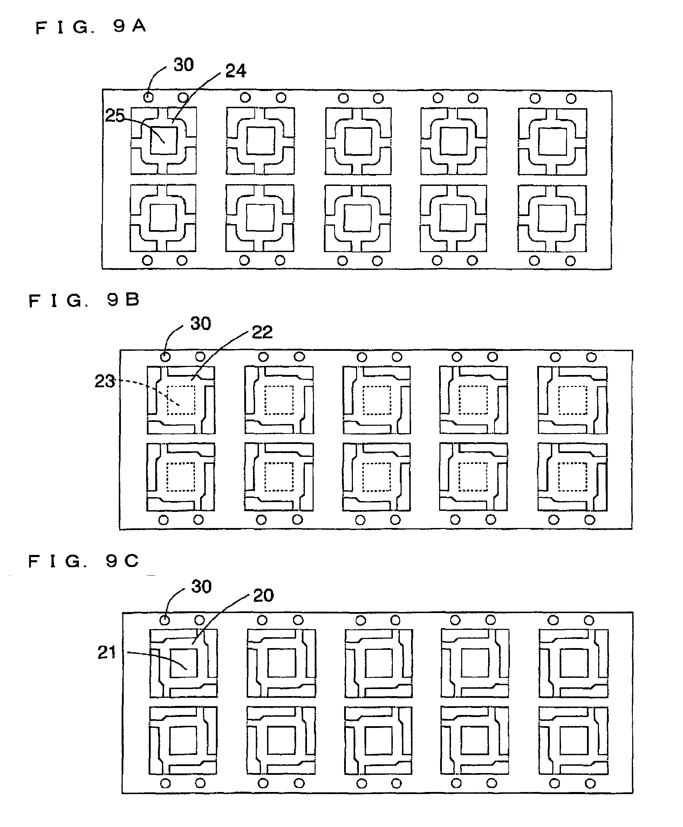

FIGS. 8A to 11 are plan views showing the assembly procedure of the bipolar battery 1. Here, FIGS. 8A to 11 show a production method in which a polymer electrolyte is used as the electrolyte-containing separator 13. FIGS. 8A to 8C are plan views respectively showing steps of forming a plurality of current collectors 24, 22, and 20 in band-shaped metal foils by punching. FIG. 8A shows a band-shaped metal foil including the plurality of bipolar electrode current collectors 24. FIG. 8B shows a band-shaped metal foil including the plurality of negative electrode current collectors 22. FIG. 8C shows a band-shaped metal foil including the plurality of positive electrode current collectors 20. FIGS. 9A to 9C are plan views respectively showing steps of forming active material layers on the plurality of current collectors 24, 22, and 20 formed in the band-shaped metal foils. FIG. 9A shows the bipolar electrodes 12. FIG. 9B shows the negative electrodes 11. FIG. 9C shows the positive electrodes 10.

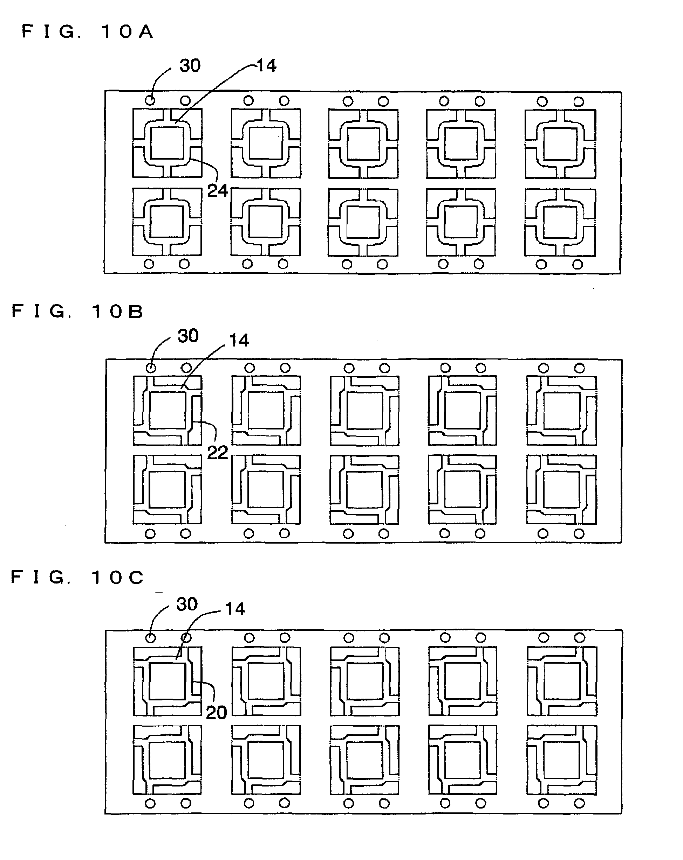

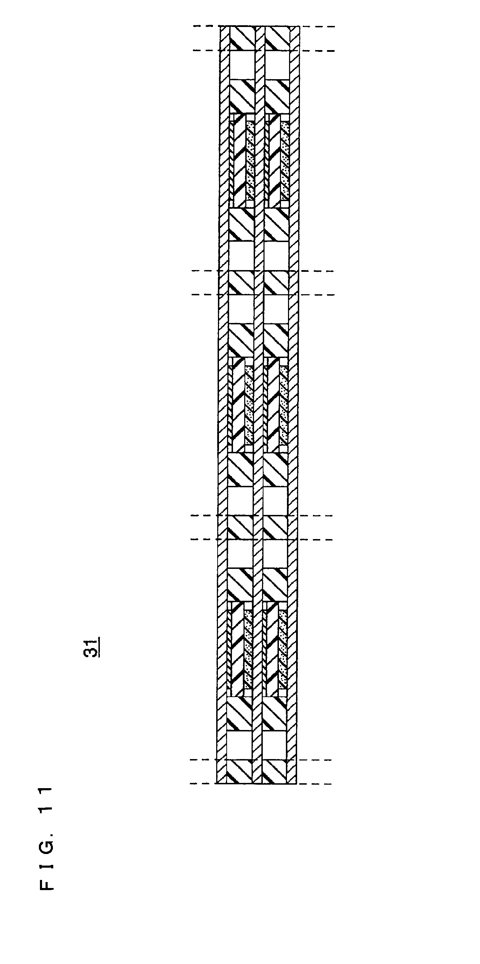

FIGS. 10A to 10C are plan views showing steps in which the sealing members 14 are arranged at the peripheral portions of the current collectors 24, 22, and 20. FIG. 10A shows the bipolar electrodes 12. FIG. 10B shows the negative electrodes 11. FIG. 10C shows the positive electrodes 10. FIG. 11 is a horizontal cross-sectional view showing a step of cutting a linked member 31 of the bipolar batteries 1. Hereinafter, the steps shown in FIGS. 8A to 11 will be described in more detail.

In the steps shown in FIGS. 8A to 8C, punching is performed to form a band-shaped metal foil in which a plurality of bipolar electrode current collectors 24 are arranged, a band-shaped metal foil in which a plurality of negative electrode current collectors 22 are arranged, and a band-shaped metal foil in which a plurality of positive electrode current collectors 20 are arranged. For example, in the band-shaped metal foil shown in FIG. 8A, the plurality of bipolar electrode current collectors 24 of the bipolar electrodes 12 are arranged and linked in the metal foil. Here, the projections function as linking portions that link the current collectors 24 and the metal foil. Furthermore, in the band-shaped metal foil, positional regulation holes 30 are preferably provided at constant intervals along at least one side parallel to the longitudinal direction. Accordingly, in the next and subsequent steps, positional regulation pins can be inserted into the holes 30, and, thus, accurate positioning can be performed at a predetermined position. Furthermore, angled portions of four corners of each bipolar electrode current collector 24 are chamfered, and, thus, in the next and subsequent steps, a decrease in the positioning precision caused by the angled portions catching other portions can be suppressed. In a similar manner, a band-shaped metal foil in which the plurality of negative electrode current collectors 22 shown in FIG. 8B are arranged and a band-shaped metal foil in which the plurality of positive electrode current collectors 20 shown in FIG. 8C are arranged are produced.

In the steps shown in FIGS. 9A to 9C, the metal foils obtained in the steps shown in FIGS. 8A to 8C are positioned, and active material layers are formed on the current collectors. For example, in the step shown in FIG. 9A, a positive electrode material mixture slurry is pattern-applied to one side of the bipolar electrode current collectors 24, dried, and then rolled with pressing rollers, and, thus, positive electrode active material layers 25 are formed. The thickness of the positive electrode active material layers 25 is, for example, 10 µm. Examples of the application method include screen printing, spray printing, gravure printing, and inkjet printing. Subsequently, the negative electrode active material layers 26 are positioned and pattern-formed on faces of the bipolar electrode current collectors 24 opposite to the faces where the positive electrode active material layers 25 are formed. Examples of the formation method include resistance heating evaporation and gas deposition. Accordingly, the bipolar electrodes 12 can be obtained. In a similar manner, the negative electrode active material layers 23 are formed on one side of the negative electrode current collectors 22 in the step shown in FIG. 9B, and the positive electrode active material layers 21 are formed on one side of the positive electrode current collectors 20 in the step shown in FIG. 9C.

In the steps shown in FIGS. 10A to 10C, the sealing members 14 in the shape of window frames are arranged and thermally welded to the peripheral portions of the current collectors 24, 22, and 20. Here, for example, sealing members made of modified polyethylene may be used as the sealing members 14. In the case where the sealing members 14 are laminated to the current collectors, the sealing members 14 are positioned. Here, as in the case of the current collectors 20, 22, and 24, a sheet in which a plurality of sealing members 14 are linked in advance at several linking portions is formed. Positional regulation holes 30 are formed through the sheet at positions corresponding to the positional regulation holes 30 of the metal foils through which the current collectors 20, 22, and 24 are formed.
In the case of the bipolar electrode current collectors 24, sheets of the sealing members 14 are positioned and overlaid on both faces of the bipolar electrode current collectors 24, the peripheral portions of the sealing members 14 are heated in the shape of window frames, and, thus, the sealing members 14 are welded to the bipolar electrode current collectors 24. In the case of the positive electrode current collectors 20 and the negative electrode current collectors 22, as described above, the sealing members 14 are welded only to a face of the current collectors on which the active material layer is provided.

After the sealing members 14 are thermally welded, a polymer electrolyte is formed on surfaces of the positive electrode active material layers 21 and 25 and the negative electrode active material layers 23 and 26. The polymer electrolyte can be formed, for example, by applying a polymer electrolyte solution to the surfaces of the active material layers, and removing the solvent component by drying. This method is preferable because polymer electrolyte membranes can be handled in a state where the membranes are formed in one piece with the electrodes. In this manner, the positive electrode active material layers 21 and the polymer electrolytes are formed on the positive electrode current collectors 20, and the negative electrode active material layers 23 and the polymer electrolytes are formed on the negative electrode current collectors 22. The positive electrode active material layers 25 and the polymer electrolytes are formed on one side of the bipolar electrode current collectors 24, the negative electrode active material layers 26 and the polymer electrolytes are formed on the other side of the bipolar electrode current collectors 24. The sealing members 14 are thermally welded respectively to the peripheral portions of the positive electrode current collectors 20, the negative electrode current collectors 22, and the bipolar electrode current collectors 24.

Next, pins are inserted into the positional regulation holes 30 of the metal foil of the current collectors 20, the metal foil of the current collectors 22, and the metal foil of the current collectors 24, and these metal foils are overlaid in a predetermined order, and the sealing members 14 are overlaid on the peripheral portions of the current collectors 20, 22, and 24. After the layers are laminated in this manner, the obtained laminate is heated under reduced pressure, and, thus, the sealing members 14 are thermally welded to each other, and the polymer electrolytes are thermally welded to each other. The polymer electrolytes are welded to each other to form the electrolyte-containing separators 13. Accordingly, the positive electrode active material layers 21, the electrolyte-containing separators 13, and the negative electrode active material layers 26, and the positive electrode active material layers 25, the electrolyte-containing separators 13, and the negative electrode active material layers 23 exert a high adhesiveness. As a result, the linked member 31 of bipolar batteries shown in FIG. 11 can be obtained. In the linked member 31, a plurality of bipolar batteries 1 are linked. Furthermore, the sealing members are thermally welded to respectively seal a power generating element including the positive electrode active material layers 21, the electrolyte-containing separators 13, and the negative electrode active material layers 26, and a power generating element including the positive electrode active material layers 25, the electrolyte-containing separators 13, and the negative electrode active material layers 23.

In the step shown in FIG. 11, linking portions indicated by dashed dotted lines in the linked member 31 are cut, and, thus, respective bipolar batteries 1 can be obtained. There is no particular limitation on the cutting method. For example, cutting may be performed using a blade or the like. In the present invention, the projections of the positive electrode current collectors, the negative electrode current collectors, and the bipolar electrode current collectors are configured so as not to overlap in the thickness direction of the batteries. The projections brought into contact with each other may cause a short circuit, but, if the linking portions are cut in a state where the projections do not overlap each other in the thickness direction of the batteries, it is possible to prevent the projections and thus the current collectors from being brought into contact with each other. Furthermore, it is also possible to avoid the possibility that a short circuit occurs via cutting burrs that are easily formed during cutting.

When the linked member 31 is produced and cut to form respective bipolar batteries 1 in the last step as described above, constituent components that are flexible and difficult to handle do not have to be individually handled. As a result, the productivity is significantly improved. Furthermore, since sheets (metal foils) in which a plurality of positive electrodes, negative electrodes, and bipolar electrodes are formed in one piece without being cut apart are laminated, and then cut to individually form a plurality of separate bipolar batteries, a plurality of thin bipolar batteries can be efficiently produced. Furthermore, in a bipolar battery in which, for example, a polymer electrolyte is used as the electrolyte-containing separator, the positive electrode active material layer, the electrolyte-containing separators, and the negative electrode active material layer are formed in one piece, and, thus, the possibility that an electrical connection failure occurs can be further reduced.

In the case where the thickness of the thus obtained bipolar battery of the present invention is reduced, and a solid electrolyte, in particular, a polymer electrolyte is used as the electrolyte-containing separator, the bipolar battery can be applied, for example, to the fields of information communication apparatuses, portable electronic apparatuses, medical apparatuses, and the like. For example, the battery together with an IC chip can be assembled into an IC card, and used for entrance and exit management, automatic ticket checkers, and the like.

### Industrial Applicability

In the present invention, each of current collectors of a positive electrode, a negative electrode and a bipolar electrode is provided with at least two projections, and the projections project outward at mutually different positions. Thus, the bipolar battery of the present invention has a high reliability of the electrical connection with an external apparatus. Furthermore, in the case where a polymer electrolyte is used as the electrolyte-containing separator, a high degree of freedom in the shape of the polymer electrolyte can be used to form a thin and flexible all-solid-state bipolar battery.
The battery of the present invention can be preferably used, for example, as a power source for apparatuses that are required to be thin and reliable, such as personal digital assistants, portable electronic apparatuses, and medical apparatuses.

### Description of Reference Numerals

- 1,2,3,4 4: Bipolar battery
- 10: Positive electrode
- 11: Negative electrode
- 12: Bipolar electrode
- 13: Electrolyte-containing separator
- 14: Sealing member
- 20: Positive electrode current collector
- 20a, 20b, 20c, 20d: Projection
- 21, 25: Positive electrode active material layer
- 22: Negative electrode current collector
- 22a, 22b, 22c, 22d: Projection
- 23, 26: Negative electrode active material layer
- 24: Bipolar electrode current collector
- 24a, 24b, 24c, 24d: Projection

## Claims

1. A bipolar battery, comprising: a positive electrode; a negative electrode; a bipolar electrode disposed between said positive electrode and said negative electrode; and an electrolyte-containing separator;
wherein said positive electrode includes a positive electrode current collector and a positive electrode active material layer formed on one face of said positive electrode current collector,
said negative electrode includes a negative electrode current collector and a negative electrode active material layer formed on one face of said negative electrode current collector,
said bipolar electrode includes a bipolar electrode current collector, a positive electrode active material layer formed on one face of said bipolar electrode current collector, and a negative electrode active material layer formed on another face of said bipolar positive electrode current collector,
said positive electrode active material layers and said negative electrode active material layers included in said positive electrode, said negative electrode, and said bipolar electrode have at least two cell elements formed by layering one positive electrode active material and one negative electrode active material so as to oppose each other via said electrolyte-containing separator,
said cell elements are sealed by a sealing member disposed at peripheral portions of said cell elements, and each of said positive electrode current collector, said negative electrode current collector, and said bipolar electrode current collector is provided with at least two projections projecting from peripheral portions of said current collectors.

2. The bipolar battery in accordance with claim 1, wherein said projections projecting from said positive electrode current collector, said negative electrode current collector, and said bipolar electrode current collector are arranged so as not to overlap each other when viewed from above from a positive electrode side.

3. The bipolar battery in accordance with claim 1, wherein said electrolyte-containing separator is a solid electrolyte.

4. The bipolar battery in accordance with claim 1, wherein said electrolyte-containing separator is a porous base material impregnated with a liquid electrolyte.

5. The bipolar battery in accordance with claim 1, comprising at least two bipolar electrodes.

6. The bipolar battery in accordance with claim 1, wherein at least one projection projects in each of four directions that are perpendicular to a direction in which said positive electrode, said negative electrode, and said bipolar electrode are laminated and that are different from each other, and, among said four directions, two directions that are adjacent to each other in a clockwise direction cross each other at right angles.

7. The bipolar battery in accordance with claim 1, wherein at least part of said projections is sealed by a sealing member.

8. The bipolar battery in accordance with claim 1, wherein tip ends of said projections have at least one chamfered corner.
